# EUROPEAN PATENT SPECIFICATION

(11) **EP 1 967 759 B1**
(45) Date of publication and mention of the grant of the patent: **22.05.2013**
(21) Application number: 06841744.3
(22) Date of filing: 18.12.2006
(51) Int. Cl.: F16G 11/04, F16G 11/10

(54) **SAFETY DEVICE FOR JOINING AND TIGHTENING FILIFORM ELEMENTS IN GENERAL, INCLUDING A HIGH-STRENGTH MECHANISM WHICH IS GUIDED ALONG THE ENTIRE COURSE THEREOF**
SICHERHEITSVORRICHTUNG ZUM VERBINDEN UND FESTZIEHEN VON FADENFÖRMIGEN ELEMENTEN IM ALLGEMEINEN MIT EINEM ENTLANG SEINER GANZEN BAHN GEFÜHRTEN HOCHFESTEN MECHANISMUS
DISPOSITIF DE SECURITE PERMETTANT D'UNIR ET DE TENDRE DES ELEMENTS FILIFORMES EN GENERAL POURVU D'UN MECANISME A HAUTE RESISTANCE GUIDE SUR LA TOTALITE DE SON TRAJET

(30) Priority: 20.12.2005 ES 200503120
(43) Date of publication of application: 10.09.2008
(73) Proprietor: Shiny Works S.L., 46200 Paiporta (ES)
(72) Inventor: MARÍN MATEOS-APARICIO, Luis, 46200 Paiporta (ES); VERDU ALVARO Ricardo, España (ES); PORTÓLES GRIÑAN Luis, España (ES)
(74) Representative: Pereira Toña, Maria Irache
(86) International application number: PCT/ES2006/000692
(87) International publication number: WO 2007/071804

(56) References cited:
- WO-A1-95/30844
- WO-A2-03/053127
- DE-U1- 20 314 436
- ES-U- 1 052 858
- GB-A- 2 210 517
- GB-A- 2 378 213
- JP-A- 9 151 996
- JP-A- 09 151 996
- US-A- 1 139 595
- US-A1- 2003 115 723

## Description

### PURPOSE OF THE INVENTION

This descriptive summary refers to an Invention Patent application corresponding to a safety device to join and tighten filiform elements in general, in addition to its use for tightening wire lines, which is designed as a monoblock body.

It is a system that can be used to connect and/or tighten wires or similar materials, guided with posts, fences, antennas, etc., and avoid that wires be twisted, bent by any means, or soldered.

### SCOPE OF THE INVENTION

This invention has applications in the industry devoted to the manufacture of auxiliary elements for wire or filiform bodies tightening in general.

### BACKGROUND OF THE INVENTION

The applicant is aware of the existence of tensors that can be used specially for tightening cables, wires, and filiform elements in general. Such tensors are known from US 2003/0115723 A1 and DE 20314436 U1. This invention adds a new guiding component for the mobile elements of the blocking mechanism, which allows a smoother operation of said mechanism, avoiding any possibility of jamming; in this new configuration, mobile wedge elements push filiform elements away from each other, allowing a greater separation between them to facilitate their tightening; the wedge element of the blocking mechanism can incorporate any compound that allows achieving a greater hardness or resistance in these elements so as to allow their use with heavier loads.

### DESCRIPTION OF THE INVENTION

The connector and safety device to join and tighten filiform elements in general that is proposed by the invention is configured as an obvious novelty within its specific application field and in defined by claim 1.

Specifically, the connector and safety device to join and tighten filiform elements in general is formed by a solid body and two covers, the assembly having two longitudinal through perforations, or channel-like holes, suited so as to receive two ends of a filiform element, wire, or any other element that is applied in a similar manner; the solid body is obtained directly by casting or injection molding and it has orifices for the incorporation of covers on the sides; the components that block the ends of the filiform element or wire are located inside the cavity of the body.

These blocking components are formed by a mobile, wedge-like element that acts directly against the element to be blocked configured as the filiform body or wire, using a compression spring, and that allows the movement of the end of the filiform body or wire along one direction of the channel, but preventing this element to move in the opposite direction; the filiform element or wire being thus fixed to the body in a restricted and immovable way within the passing channel.

### DRAWINGS DESCRIPTION

As a complement to the description herein included, and in order to help better understand the characteristics of the invention, two pages of descriptive but not limiting diagrams have been attached to this descriptive summary as an integral part of it, showing the following:

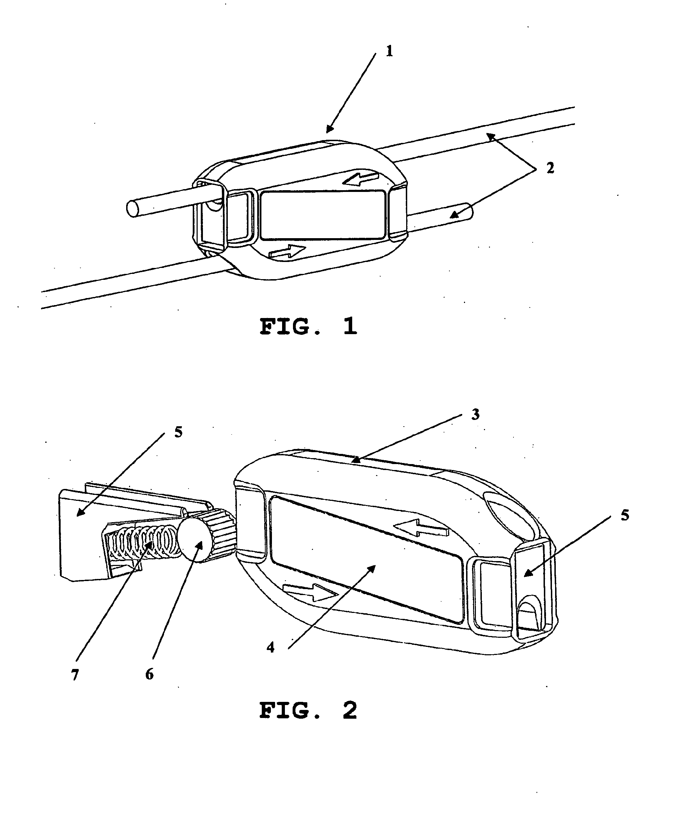

Figure 1 represents a perspective view of the assembly described by this invention, corresponding to a connector and safety device and to join and tighten filiform elements in general, where the ends of the filiform element or wire that are joined and tightened within the object can be seen.
Figure 2 represents a perspective view of the assembly described by this invention, corresponding to a connector and safety device to join and tighten filiform elements in general, with one of the' covers introduced in the body and the other cover outside the body; the components that block the filiform element, composed of a spring and a dented roll as mobile wedge element, are also represented; the covers are located inside the body, which has orifices suited for their placement on the inside, this cavity also hosting the blocking components that form the retaining mechanism.

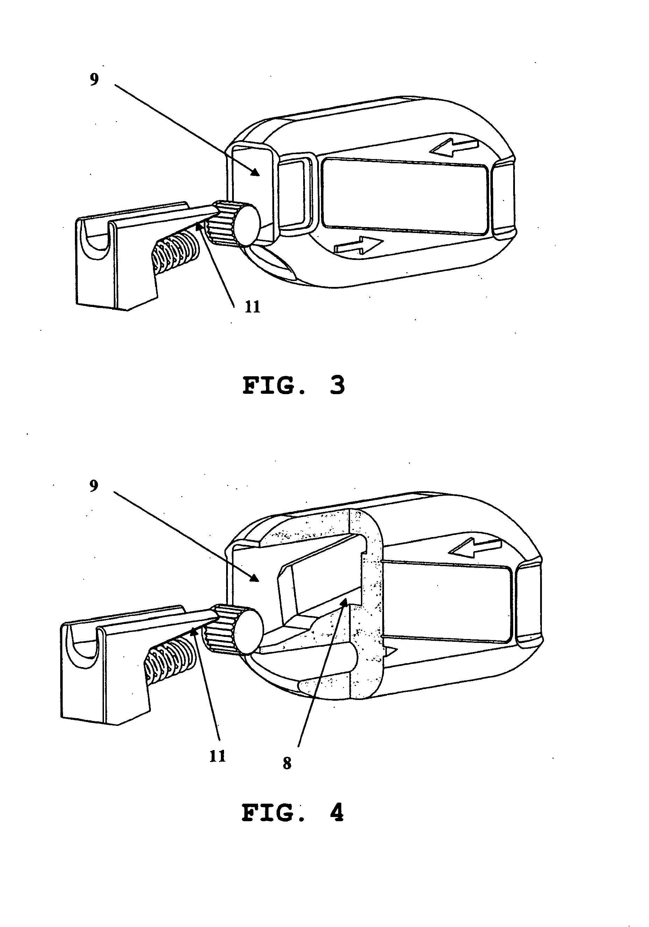

Figure 3 represents a perspective view of the assembly described by this invention, corresponding to a connector and safety device to join and tighten filiform elements in general, where the side opening of the body for introducing the cover and the blocking components can be seen.
Figure 4, represents a section perspective view of the assembly described by this invention, corresponding to a connector and safety device to join and tighten filiform elements in general, where the covers and their corresponding blocking components that form the retaining mechanism, which will be added to the body, can be seen.

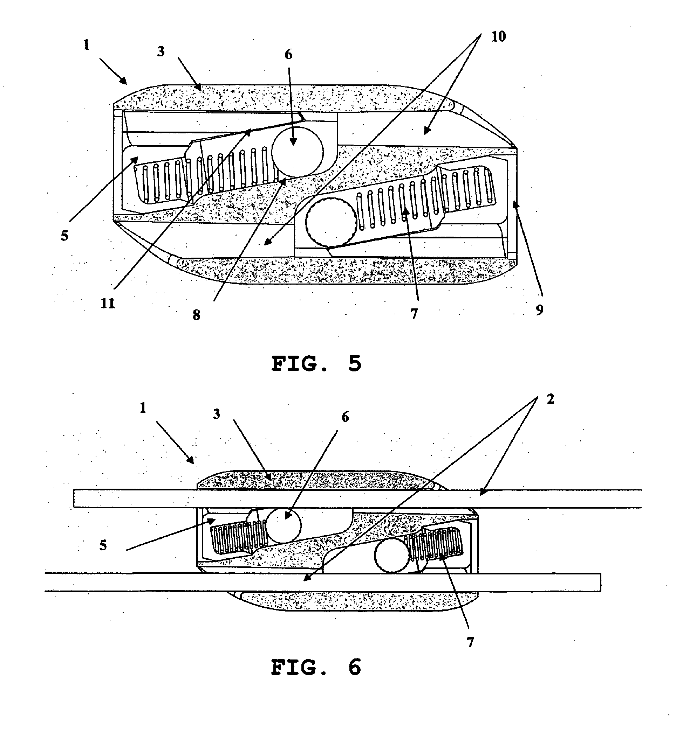

Figure 5 shows a front view of the invention represented in the previous figures fully mounted with its covers and the corresponding blocking components that form the retaining mechanism.
Figure 6 shows a front view of the invention represented in the previous figures, with the ends of the cables or filiform elements to be joined.

### PREFERRED MATERIALIZATION OF THE INVENTION

These figures allow seeing how the connector and safety device to join and tighten filiform elements in general (2) is formed by a body (3) that can present an orifice (4) in the center of its larger sides, has covers (5) that close the assembly and prevent the mechanisms that block filiform elements or wires to go out; these mechanisms are formed by a retaining element which in this case is a dented, wedge-like wheel (6) implemented by a spring (7); the dented wheel (6) rests on an inclined surface (8) of the inner cavity (9) of the body (3); this inclined surface forms an acute angle with the upper, adjacent side of the body cavity with respect to the inclined surface.

The cover (5) has an extension (11) whose lower edge is parallel to the inclined surface (8) of the inner cavity (9) of the body (3), forming with this inclined surface a perfectly guided path throughout its length, with a wedge (6) and a spring (7) that pushes the wedge (6) directly over the surface of the cable, filiform element or wire (2), which will be retained with no possibility of movement at all on the direction opposite to that in which it is introduced; the wire goes through the channels (10) that are configured after the introduction of the cover (5) in the side hole or opening (9) of the body (3).

The invention presents the application elements, such as the dented wheel (6) implemented with its support spring (7), located on the inclined surface (8) of the side opening (9) of the body (3), a cover (5) with an extension for the proper guidance of the dented wheel (6) throughout its path and which is introduced through one of the side openings (9) of the body (3) and remains inside it, the cable, wire, or filiform element being thus hanging inside it and immobilized by the action of the wedge (6) and the spring (7) that acts on it.

## Claims

1. Connector and safety device to join and tighten filiform elements in general that are devised to be used to join, fix, and tighten ends of filiform elements, wires or cables (2), which can be located between two rigid elements, such as posts, fences, etc., and that prevent wires or similar elements from being twisted, bent by any means or soldered; said device being composed of a monoblock body (3) with inner cavities (9) that have inclined surfaces (8) in the same general direction and one adjacent upper side forming an acute angle with respect to the inclined surface; inside these cavities the wire retaining mechanisms (6,7) and the covers (5) that close the assembly, are placed, and wherein said retaining mechanisms are formed by a dented, wedge-like wheel (6) and a spring (7); said cover (5) has an extension (11) whose lower edge is parallel to the inclined surface (8) of the inner cavity (9) of the body (3), forming with this inclined surface a perfectly guided path throughout its length, with a dented, wedge-like wheel (6) and a spring (7) that pushes the dented, wedge-like wheel (6) directly over the surface of the cable, filiform element or wire (2), which will be retained with no possibility of movement at all on the direction opposite to that in which it is introduced; the wire goes through the channels (10) that are configured after the introduction of the cover (5) in the side hole or opening (9) of the body (3); **characterized in that** said wedge-like wheel (6) and the spring (7) are perfectly guided throughout their path by means of two long extensions (11) of the cover (5) so that, after their introduction inside the inner cavity (9) of the body (3), the lower border of these extensions runs parallel to the inclined surface (8) of the cavity (9) through the entire length of the cavity, which creates a path between the mentioned lower border of the extensions (11) and the inclined surface (8) that guides the dented, wedge-like wheel (6) and the spring (7) throughout their path; and wherein, in use, when the cover (5) is in the inner cavities (9) cf the body (3) the dented wedge-like wheel (6) rests on the inclined surface (8) of said inner cavities (9).

## Patentansprüche

1. Anschlussstück und Sicherheitsvorrichtung zum Verbinden und Spannen von fadenförmigen Elementen allgemein, welche dazu vorgesehen sind, zum Verbinden, Befestigen und Spannen der Enden von fadenförmigen Elementen, Drähten oder Kabeln (2) verwendet zu werden, welche sich zwischen zwei steifen Elementen, wie Posten, Zäunen, usw. befinden können, und welche verhindern, dass die Drähte oder ähnliche Elemente verdreht, durch irgendwelche Mittel verbogen oder verschweißt werden; wobei die genannte Vorrichtung aus einem Monoblockkörper (3) mit inneren Aushöhlungen (9) besteht, welche geneigte Flächen (8) in derselben allgemeinen Richtung aufweisen und wobei eine benachbarte obere Seite einen spitzen Winkel in Bezug auf die geneigte Fläche bildet; innerhalb dieser Aushöhlungen befinden sich Drahthaltemechanismen (6, 7) und die Bedeckungen (5), welche die Anordnung schließen, und wobei die genannten Haltemechanismen aus einem verzahnten, keilartigen Rad (6) und aus einer Feder (7) gebildet sind; die genannte Bedeckung (5) weist eine Erstreckung (11) auf, dessen unterer Rand parallel zur geneigten Fläche (8) der inneren Aushöhlung (9) des Körpers (3) ist, unter Bildung mit dieser geneigten Fläche einer perfekt geführten Bahn durch ihre ganze Länge, mit einem verzahnten, keilartigen Rad (6) und einer Feder (7), welche das verzahnte, keilartige Rad (6) direkt über die Fläche des Kabels, des fadenförmigen Elements oder des Drahts (2) drückt, welche ohne Bewegungsmöglichkeit überhaupt in der zur Einführungsrichtung entgegengesetzten Richtung gehalten wird; der Draht geht durch die Kanäle (10), welche nach der Einführung der Bedeckung (5) in das seitliche Loch oder die Öffnung (9) des Körpers (3) ausgebildet werden; **dadurch gekennzeichnet, dass** das genannte keilartige Rad (6) und die Feder (7) perfekt durch ihre ganze Bahn mittels zwei langen Erstreckungen (11) der Bedeckung (5) so geführt werden, dass nach ihrer Einführung innerhalb der inneren Aushöhlung (9) des Körpers (3), die untere Kante dieser Erstreckungen parallel zur geneigten Fläche (8) der Aushöhlung (9) durch die ganze Länge der Aushöhlung verläuft, was eine Bahn zwischen der genannten unteren Kante der Erstreckungen (11) und der geneigten Fläche (8) bildet, welche das verzahnte, keilartige Rad (6) und die Feder (7) durch ihre ganz Bahn führt; und wobei, im Einsatz, wenn sich die Bedeckung (5) in den inneren Aushöhlungen (9) des Körpers (3) befinden, das verzahnte, keilartige Rad (6) auf der geneigten Fläche (8) der genannten inneren Aushöhlungen (9) aufliegt.

## Revendications

1. Connecteur et dispositif de sécurité pour relier et serrer des éléments filiformes en général qui sont conçus pour être utilisés pour relier, fixer, et serrer des extrémités d'éléments filiformes, des fils ou des câbles (2), qui peuvent être situés entre deux éléments rigides, tels que des poteaux, des clôtures, etc. et qui évitent que les fils ou éléments analogues soient tordus, courbés par n'importe quel moyen ou soudés ; ledit dispositif étant composé d'un corps monobloc (3) avec des cavités intérieures (9) qui possèdent des surfaces inclinées (8) dans la même direction générale et un côté supérieur adjacent formant un angle aigu par rapport à la surface inclinée ; à l'intérieur de ces cavités sont mis en place les mécanismes de prétention de fils (6, 7) et les couvertures (5) qui ferment l'ensemble, et où lesdits mécanismes de rétention sont formés par une roue dentée cunéiforme (6) et un ressort (7) ; ladite couverture (5) a une extension (11) dont le bord inférieur est parallèle à la surface inclinée (8) de la cavité intérieure (9) du corps (3), formant avec cette surface inclinée un trajet parfaitement guidé à travers toute sa longueur, avec une roue dentée cunéiforme (6) et un ressort (7) qui pousse la roue dentée cunéiforme (6) directement sur la surface du câble, élément filiforme ou fil (2), qui sera retenu sans aucune possibilité de déplacement dans la direction opposée à celle dans laquelle il est introduit ; le fil passe à travers les canaux (10) qui sont configurés après l'introduction de la couverture (5) dans le trou ou ouverture latérale (9) du corps (3) ;
**caractérisé en ce que** ladite roue cunéiforme (6) et le ressort (7) sont parfaitement guidés à travers leur trajet au moyen de deux extensions longues (11) de la couverture (5), de manière qu'après leur introduction à l'intérieur de la cavité intérieur (9) du corps (3), la bordure inférieure de ces extensions défile en parallèle à la surface inclinée (8) de la cavité (9) à travers toute la longueur de la cavité, ce qui crée un trajet entre ladite bordure inférieure des extensions (11) et la surface inclinée (8) qui guide la roue dentée cunéiforme (6) et le ressort (7) à travers tout leur trajet ; et où, en fonctionnement, lorsque la couverture (5) est dans les cavités intérieures (9) du corps (3), la roue dentée cunéiforme (6) repose sur la surface inclinée (8) desdites cavités intérieures (9).
